# EUROPEAN PATENT APPLICATION

(11) **EP 1 366 892 A1**
(43) Date of publication of application: **03.12.2003**
(21) Application number: 02253747.6
(22) Date of filing: 28.05.2002
(51) Int. Cl.: B29D 11/00, G02C 7/04

(54) **Colored contact lens and method of manufacturing the same**

(71) Applicant: Mi Gwang Contact Lens Co., Ltd, Kyungsan city, Kyungsangbok.do (KR)
(72) Inventor: Kim, Ssang-gi, Deagu Metropolitan city (KR)
(74) Representative: Browne, Robin Forsythe, Dr.

(57) **Abstract**

Disclosed are a colored contact lens and a method for manufacturing thereof, which forms a lens body by supplying a lens material onto a lower mold, molding a lens body with an upper mold and forms a cut portion and an optical portion by cutting off an upper surface of the lens body, and then forms a lens cover by forming an iris-colored part through printing on the cut portion and then supplying the lens material again onto the lens body, thus enabling mass production of the colored contact lens which does not cause any discomfort.

## Description

### BACKGROUND OF THE INVENTION

### 1. Field of the Invention

The present invention relates to the field of a contact lens and, more particularly, to a colored contact lens having iris-colored part onto the lens core, and a method for manufacturing thereof.

### 2. Description of the Relevant Art

Generally, many people desire to have beautiful eyes and more recently people desire more beautiful and natural eye colors. Every race has its peculiar iris color, which makes each face look different. Some people want to possess a unique eye color which is different from their natural eye color. However, cosmetics or other accessories are not satisfactory to them.

To satisfy this desire, there is provided a colored contact lens, which is made by coloring the portion of a contact lens which covers the iris. This colored contact lens may serve two purposes; improving eyesight and enhancing appearance at the same time.

Until now, many kinds of colored contact lenses have been developed and used by many manufacturers all over the world.

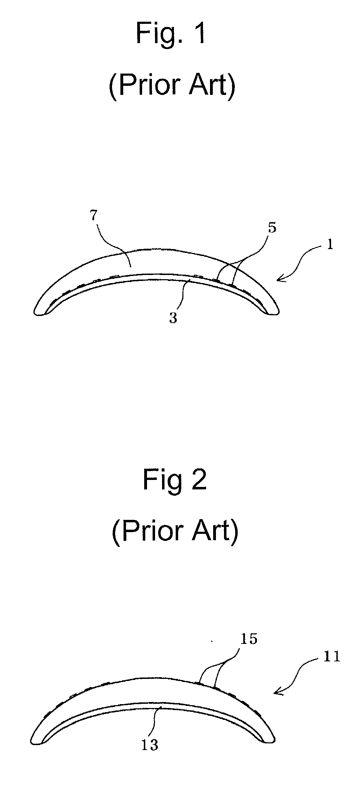

At first, as shown in Fig. 1, an opaque colored soft contact lens is developed from Titomus Eurocon Co. in Germany. To make this lens, the technique provides a lower lens 3 by polymerizing HEMA (2-Hydroxyethylmethacrylate) and then forms an iris-colored part 5 by individually and manually painting a desired iris color with an opaque dye or pigment on the lower lens 3.

Then, a transparent upper contact lens 7 made of HEMA is bonded to the lower lens 3 having the iris-colored part 5 to make the colored contact lens 1.

However, since the iris-colored part 5 is painted on the lower lens 3 by hand, a pair of lenses may have different colors due to a lack of reproduction. Additionally, since two lenses are put together, they are thicker, and thus uncomfortable to wear.

There is also proposed a coloring technique for an opaque colored soft contact lens from Wesley Jackson Co. in U.S. As shown in Fig. 2, this technique suggests a method of polymerizing HEMA to form a lens 13 and then forming a iris-colored part by drawing lines with innumerable dots on the lens 13, thus making a colored contact lens 11.

In this technique, the iris-colored part 15 is directly formed on a surface of the lens 13. Though attractive, such a configuration may cause friction between the inner side of an eyelid and the iris-colored part of the contact lens. Thus, this kind of conventional lens cannot be used for a long period of time because of the possibility of conjunctivitis or absorption of waste matter, such as proteins or lipids, around the iris-colored part.

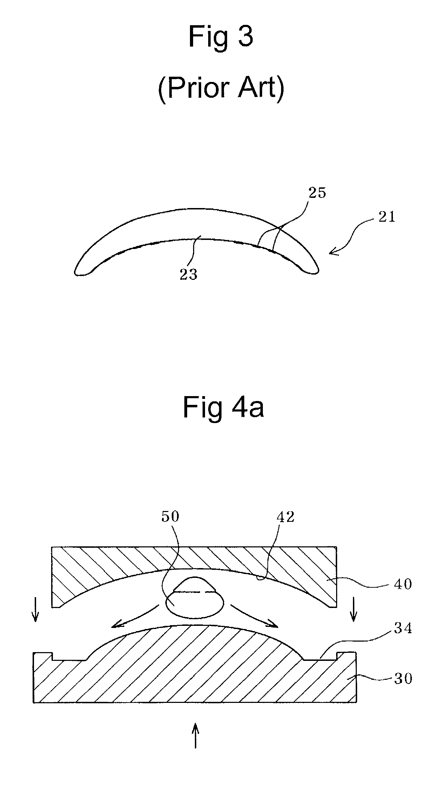

There is also developed a colored soft lens technique by Sereko Co. in England as shown in Fig. 3. This technique first provides a mold, and then forms a lens 23 onto the mold, in which HEMA monomer is polymerized and forms a lens having an iris-colored part 25 where opaque dyes mixed with HEMA monomer are printed, and then cut the lens 23 to make a colored soft lens 21.

Although this method makes mass production possible since the mold is used to make the lens 23, this technique has a problem in that it causes discomfort to the wearer of the contact lens and even causes keratitis as the iris-colored part on the lower side of the lens rubs a cornea when blinking.

### SUMMARY OF THE INVENTION

The present invention is designed to overcome the above-mentioned problems of the colored contact lens, and an object of the present invention is to provide a colored contact lens which is comfortable and looks natural when wearing. Another object of the present invention is to provide a colored contact lens and a method for manufacturing thereof, which enables mass production with a lower cost.

In order to accomplish the above object, the present invention provides a colored contact lens comprising: a lens body having a cut portion and an optical portion, the cut portion formed by cutting off an upper surface of the lens body and the optical portion being upwardly protruded; an iris-colored part formed on the cut portion; and a lens cover formed by supplying a monomer and polymerizing on the upper surface of the lens body, whereby the iris-colored part is positioned on a lens core.

In another aspect of the present invention, there is provided a method for manufacturing a colored contact lens, the method comprising the steps of: providing a lens body by supplying the first lens material onto a lower mold and molding the first lens material with an upper mold; forming an optical portion and a cut portion by cutting off an upper surface of the lens body, the optical portion being upwardly protruded; forming an iris-colored part having an iris shape with a color on the cut portion; and forming a lens cover by supplying the second lens material onto the lens body and polymerizing the second lens material with a surface of the lens body.

The method may further comprise the step of cutting off an upper surface of the lens cover after forming the lens cover.

Preferably, the lower and upper molds are made of a material selected from the group consisting of polycarbonate, polybutyleneterephthalate and a mixture thereof.

The method may also further comprise the step of printing a transparent color on a surface of the optical portion.

Preferably, the iris-colored part is formed by multiple printing in dot pattern.

In addition, the first and second lens materials are preferably selected from the group consisting of HEMA(2-Hydroxyethylmethacrylate), HEMA+NVP (N-Vinyl-2-Pyrrolidone) and a mixture thereof.

Furthermore, the iris-colored part is preferably formed by a mixture of colorant, TiO₂, and at least one of HEMA and HEMA+NVP.

In still another aspect of the present invention, there is also provided a method of manufacturing a colored contact lens, the method comprising the steps of: providing a lens body by supplying a lens material onto a lower mold and molding the lens material with an upper mold; forming a cut portion by cutting off an upper surface of the lens body; forming an iris-colored part having an iris shape with a color on the cut portion; and supplying the lens material onto a surface of the lens body and polymerizing the lens material with the surface of the lens body.

### BRIEF DESCRIPTION OF THE DRAWINGS

These and other features, aspects, and advantages of preferred embodiments of the present invention will be more fully described in the following detailed description, taken with the accompanying drawings. In the drawings:
Fig. 1 is a sectional view showing an example of a colored contact lens according to the prior art;
Fig. 2 is a sectional view showing another example of a colored contact lens according to the prior art;
Fig. 3 is a sectional view showing still another example of a colored contact lens according to the prior art;
Figs. 4a to 4g subsequently show a method of manufacturing a colored contact lens according to a first embodiment of the present invention;
Fig. 5 shows the colored contact lens manufactured by the first embodiment of the present invention; and
Figs. 6a to 6f subsequently show a method of manufacturing a colored contact lens according to a second embodiment of the present invention.

### DETAILED DESCRIPTION OF THE INVENTION

Hereinafter, preferred embodiments of the present invention will be described in detail with reference to the accompanying drawings.

Firstly, a colored contact lens according to the first embodiment includes a lens body 60 and a lens cover 80, wherebetween an iris-colored part 66 is formed at a position corresponding to the iris.

The lens body is formed by injecting and polymerizing monomer. The iris-colored part 66 can be printed with a predetermined color on the lens body 60. The lens cover 80 is formed on the lens body having the iris-colored part 66 by injection and polymerizing monomer which is identical to or different from that of the lens body 60.

The colored contact lens also includes a cut portion 62 and a optical portion (a), the cut portion 62 formed by cutting off an upper surface of the lens body 60 and the optical portion (a), where light enters, having a protrusion 64 upwardly protruded from the cut portion 62. The iris-colored part 66 is printed on the cut portion 62 except the optical portion.

According to the present invention, the lens cover 80 is polymerized on the lens body 60 after the iris-colored part 66 is printed on the cut portion 62, whereby the iris-colored part 66 is positioned not on a lens surface but on a lens core.

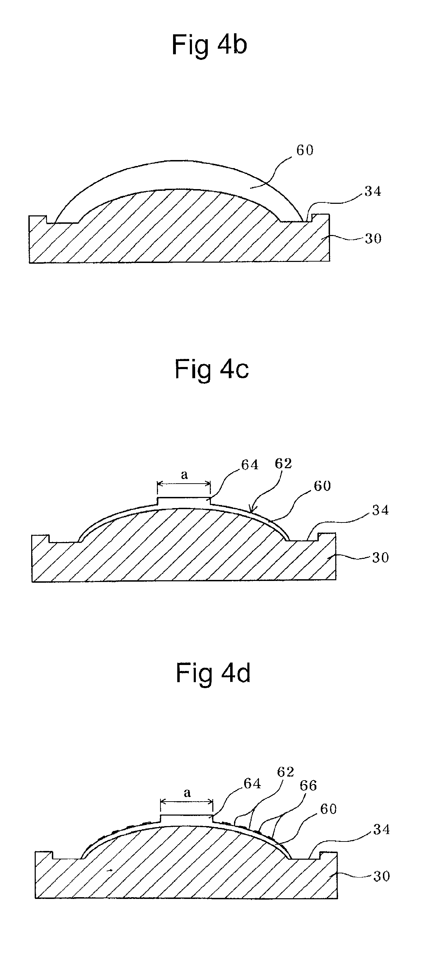

To make the colored contact lens according to the first embodiment, as shown in Figs. 4a and 4b, a first lens material 50 is injected onto a lower mold 30 to shape a contact lens. The first lens material 50 is then pressed with a pressing surface 42 of an upper mold 40 to form the lens body 60.

The upper and lower molds 30, 40 can be made of polycarbonate or polybutyleneterephthalate.

As shown in Fig. 4c, there is provided a protrusion 64 by forming the cut portion 62, which is made by cutting off the upper surface of the lens body except for the optical portion (a) on the lens body 60 so that the optical portion (a) is protruded to a certain height.

The optical portion (a) refers to the circular area corresponding to the pupil in the center of an iris. A transparent color can be printed upon the optical portion (a) of the protrusion 64.

Then, as shown in Fig. 4d, an iris-colored part 66, having an iris shape, is formed on the cut portion 62 with a predetermined color.

At this time, several colors may be printed multiple times in an iris shape on the iris-colored part 66 so that the contact lens may have diverse, precise and clear colors.

In addition, the iris-colored part 66 may represent a line by connecting innumerable dots in a dot pattern.

The predetermined color for the iris-colored part 66 is preferably made of a mixture of colorant, TiO₂, and HEMA or HEMA+NVP.

Such an opaque pattern of the iris-colored part 66 may be changed as desired, and may have mono-color or multiple opaque colors. The colorant should preferably be one officially adopted by the FDA in America. The following colorants are available.

**Table 1**

| Colorant | C.I No | Cas No |
|---|---|---|
| D&C Green No.6: 21CFR 74.3206 | 61565 | 128-80-3 |
| D&C Yellow No.10: 21CFR 74.37190 | 47005 | 8004-92-0 |
| [Phthalocyaninato(2-)]copper: 21CFR 74.3045 | 74160 | 147-14-8 |
| Carbazole violet: 21CFR 73.3107 | 51319 | 6358-30-1 |
| Sudan III: 21CFR 74.3230 | 26100 | 85-86-9 |
| ● CFR: Code Of Federal Regulation | | |
| ● C. I. No : Color Index Number | | |
| ● CAS No : Chemical Abstracts Service Registry Number | | |

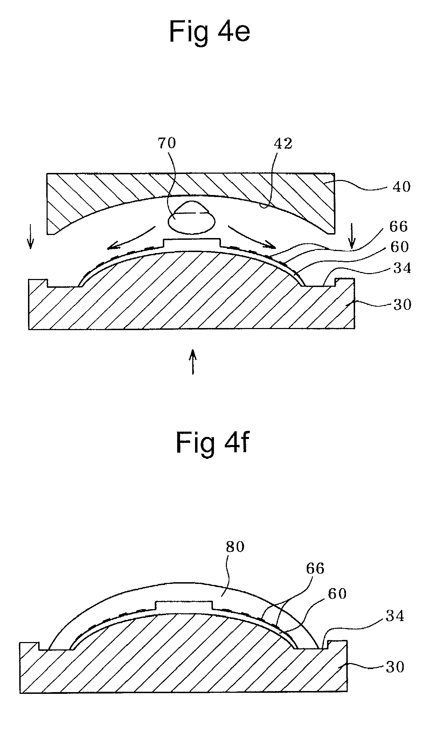

As is shown in Figs. 4e and 4f, a second lens material 70 is supplied on the lens body 60, on which the iris-colored part 66 is formed. Pressing the second lens material 70 is then performed with the upper mold to form the lens cover 80.

The first and second lens materials 50, 70 are selected respectively from the group consisting of HEMA (2-Hydroxyethylmethacrylate), HEMA+NVP (N-Vinyl-2-Pyrrolidone) or their mixture.

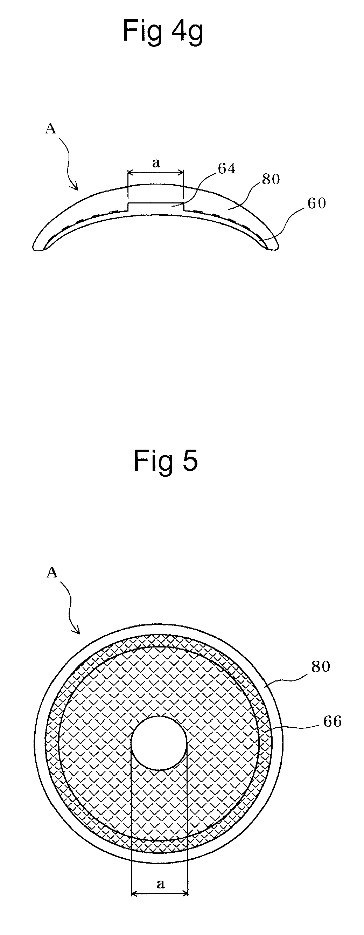

As shown in Fig. 4g, an upper surface of the lens cover 80 can then be cut to produce a smooth surface. As it is retrieved from the lower mold 30, the colored contact lens (A) of the present invention is completed.

Referring to Fig. 5 showing the surface of the lens cover 80, it clearly shows the iris-colored part 66.

A method for manufacturing a colored contact lens according to the second embodiment of the present invention is described.

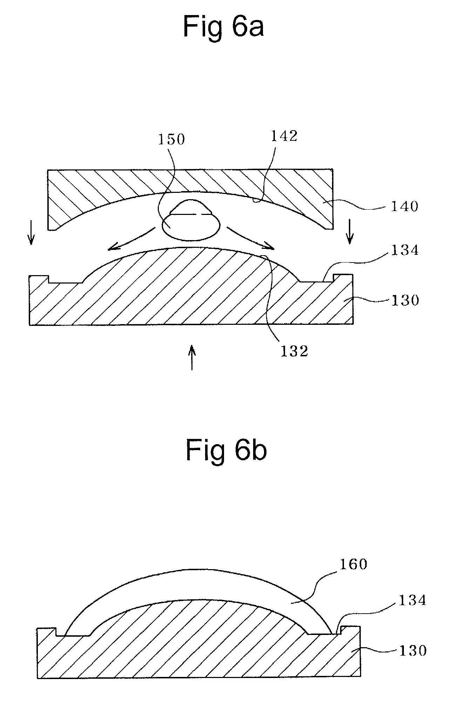

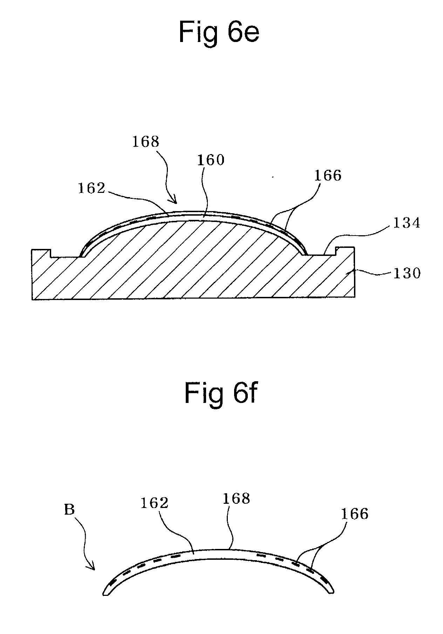

Referring to Figs. 6a and 6b, a lens material 150 is injected onto a lower mold 130. The lens material 150 is then pressed with a pressing surface 142 of an upper mold 140 to form the lens body 160.

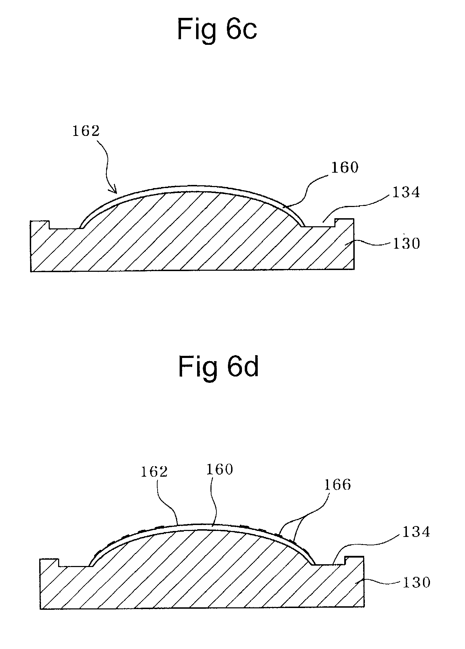

As shown in Fig. 6c, a cut portion 162 is formed by cutting off the upper surface of the lens body 160.

As shown in Fig. 6d, an iris-colored part 166 of an iris shape with a predetermined color is formed on the cut portion 162.

As shown in Fig. 6e, the lens material 150 is then supplied onto the lens body 160 on which the iris-colored part 166 is formed. The lens material 150 is polymerized on the surface of the lens body 160.

At this time, the lens material 150 and the predetermined color for the iris-colored part are made of substantially identical to those of the first embodiment.

The present invention has been described in detail. However, it should be understood that the detailed description and specific examples, while indicating preferred embodiments of the invention, are given by way of illustration only, since various changes and modifications within the spirit and scope of the invention will become apparent to those skilled in the art from this detailed description.

## Claims

1. A colored contact lens comprising:
a lens body having a cut portion and an optical portion, the cut portion formed by cutting off an upper surface of the lens body and the optical portion being upwardly protruded;
an iris-colored part formed on the cut portion; and
a lens cover formed by supplying and polymerizing a monomer on the upper surface of the lens body, whereby the iris-colored part is positioned at a lens core.

2. A method for manufacturing a colored contact lens, the method comprising the steps of:
forming a lens body by supplying the first lens material onto a lower mold and molding the first lens material with an upper mold;
forming an optical portion and a cut portion by cutting off an upper surface of the lens body, the optical portion being upwardly protruded;
forming an iris-colored part having an iris shape on the cut portion; and
forming a lens cover by supplying and polymerizing the second lens material onto the lens body.

3. The method according to claim 2, further comprising the step of cutting off an upper surface of the lens cover after forming the lens cover.

4. The method according to claim 2, wherein the lower and upper molds are made of a material selected from the group consisting of polycarbonate, polybutyleneterephthalate and a mixture thereof.

5. The method according to claim 2, further comprising the step of printing a transparent color on a surface of the optical portion.

6. The method according to claim 2, wherein the iris-colored part is formed by multiple printing in dot pattern.

7. The method according to claim 2, wherein the first and second lens materials are selected from the group consisting of HEMA(2-Hydroxyethylmethacrylate), HEMA+NVP(N-Vinyl-2-Pyrrolidone) and a mixture thereof.

8. The method according to claim 2 or 6, wherein the iris-colored part is formed with a mixture of colorant, TiO₂, and at least one of HEMA and HEMA+NVP.

9. A method for manufacturing a colored contact lens, the method comprising the steps of:
forming a lens body by supplying a lens material onto a lower mold and pressing the lens material with an upper mold;
forming a cut portion by cutting off an upper surface of the lens body;
forming an iris-colored part having iris shape on the cut portion; and
supplying and polymerizing the lens material on a surface of the lens body.
